# EUROPEAN PATENT APPLICATION

(11) **EP 1 465 381 A2**
(43) Date of publication of application: **06.10.2004**
(21) Application number: 04006420.6
(22) Date of filing: 17.03.2004
(51) Int. Cl.: H04L 29/06

(54) **Program, method and apparatus providing mobility of voice over IP terminals**

(30) Priority: 31.03.2003 JP 2003094364
(71) Applicant: Kabushiki Kaisha Toshiba, Tokyo (JP)
(72) Inventor: Kashimoto, Shinichi, Tokyo 105-8001 (JP); Araki, Motohisa, Tokyo 105-8001 (JP)
(74) Representative: Henkel, Feiler & Hänzel

(57) **Abstract**

A computer program, which is used to voice talking to cause an information terminal to execute voice talking, managing an ID of the information terminal and a first address over a first network, stores instructions for execution on a computer system enabling the computer system to perform determining that the information terminal moves over a second network which is different from the first network, acquiring a second address over the second network, and transmitting a request for re-registering a combination of the second address and the ID instead of the first address into another device having a combination of the first address and the ID registered therein.

## Description

The present invention relates to a voice talking method using VoIP (Voice over Internet Protocol, Internet telephone), and more particularly, to a VoIP terminal mobile management method.

With the spread of Internet, a data transfer speed over an IP network is improved. Thus, in an Internet telephone as well, talking between inside networks (hereinafter, referred to as "subnets") such as LAN (Local Area Network) as well as talking between different types of subnets can be carried out.

Therefore, a VoIP terminal which is a portable information device enabling voice talking may move between subnets. In this case, the VoIP terminal disables voice talking by using an IP address before movement because an IP address in the subnet after movement is newly acquired.

In order to carry out talking by using the newly acquired IP address after such movement, in a communication control system in a conventional mobile IP, a call setting request from a communication party to a mobile node is transmitted to a home agent. The home agent transfers the request to an IP address of a move destination of the mobile node. Then, the mobile node can carry out direct talking by directly transmitting call setting acceptance, call-out, and response to the communication party. When talking terminates, the communication party deletes a stored move destination address. Therefore, there is a need for storing only the move destination address associated with a call during communication, and thus, resources of the communication party's equipment can be saved.

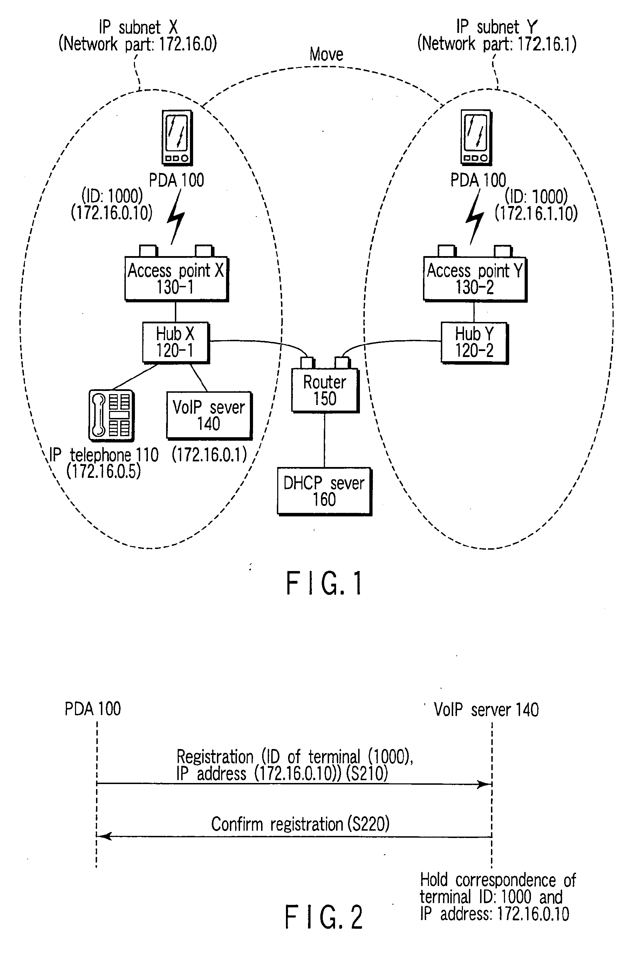

In a mobile IP, an address management server manages a table of a home address and a destination address to be moved in batch. Thus, a transmission terminal for a mobile IP has an address table cache which is cleared after an elapse of time. At the transmission terminal, when transmission data is posted from telephone application program (hereinafter, referred to as telephone program), a socket hook processing unit intercepts an address. When the address table cache is cleared, inquiry to the address management server is made, and if necessary, a transmission address is converted. In this manner, the telephone program enables communication without worrying about the fact that the address has been changed (for example, refer to Jpn. Pat. Appln. KOKAI Publication No. 2001-144811 (pages 3 and 4, FIGS. 1, 2 and 13).

However, in the mobile IP, since the address management server manages the table of the home address and the destination address to be moved in batch, the table is not managed at the terminal side. Thus, when talking terminates, address table cache data is erased. Therefore, it is necessary to make inquiry to the address management server every time talking is started, and a load on a permanent network associated with call control occurs.

An object of the present invention is to provide a voice talking method reducing a load on a network associated with call control.

According to first aspect of the present invention, there is provided with a computer program, which is used to voice talking to cause an information terminal to execute voice talking, managing an ID of the information terminal and a first address over a first network, configured to store instructions for execution on a computer system enabling the computer system to perform: determining that the information terminal moves over a second network which is different from the first network; acquiring a second address over the second network; and transmitting a request for re-registering a combination of the second address and the ID instead of the first address into another device having a combination of the first address and the ID registered therein.

According to second aspect of the present invention, there is provided with a voice talking method of causing an information terminal having an ID and a first address over a first network to carry out a voice talking, comprising: determining that the information terminal moves onto a second network which is different from the first network; acquiring a second address over the second network; and transmitting a request for re-registering the second address instead of the first address into another device having the first address registered therein.

According to third aspect of the present invention, there is provided with a voice talking apparatus having an ID and a first address over a first network, comprising: means for determining movement onto a second network which is different from the first network; means for acquiring a second address over the second network; and means for transmitting a request for re-registering the second address instead of the first address into another device having the first address registered therein.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing a whole VoIP system according to one embodiment of the present invention;
FIG. 2 is a diagram showing a sequence for registering an IP address and an identification name (ID) ;
FIG. 3 is a figure showing a schematic configuration of a PDA according to the embodiment of the present invention;
FIG. 4 is a diagram showing a sequence in the case where an IP telephone 110 makes a call to a PDA 100;
FIG. 5 is a flow chart showing acquisition and re-registration of a new IP address in the case where the PDA 100 has moved from an IP subnet X to an IP subnet Y;
FIG. 6 is a diagram showing a sequence for talking continuation in the case where a subnet has been moved during talking;
FIG. 7 is a diagram showing a sequence in the case where a call control packet is exchanged via a VoIP server, but a voice packet is directly received and transmitted at an end to an end; and
FIG. 8 is a diagram showing a sequence in the case where a call control packet is exchanged via a VoIP server, but a voice packet is directly received and transmitted at an end to an end.

Hereinafter, preferred embodiments of the present invention will be described with reference to the accompanying drawings.

H.323 and SIP (Session Initiation Protocol) are exemplified as a registration protocol for a VoIP server 140 to register a PDA 100 and an IP telephone 110 as a VoIP terminal. In addition, H.323, SIP, and MEGACO (Media Gateway Control; Name of ITU-T is H.248) are exemplified as a call control protocol for controlling call departure and call arrival. Further, an RTP (Real-time Transport Protocol) is exemplified as a transmission protocol for carrying a voice as a packet. In the present embodiment, the H.323 is used as a registration protocol or a call control protocol, and the RTP is used as a transmission protocol.

FIG. 1 is a diagram showing a whole VoIP system according to one embodiment of the present invention.

The PDA 100 has an ID (corresponding to a normal telephone number) 1000 and an IP address 172.16.0.10. A configuration of the PDA 100 will be described later.

The IP address is composed of an IP network address (for example, 172.16.0) and an IP host address (for example, 10). The IP network address is used to identify a network such as a subnet, and is managed by a router 150. Therefore, all the IP network addresses of the IP terminal connected to an IP subnet X (network portion: 172.16.0) managed by this router via a hub X120-1 or an access point X130-1 are set to 172.16.0. On the other hand, the IP host address is used to identify a host device in a network identified by the IP network address. Therefore, the IP address of each terminal is set to 172.16.0.1 for the VoIP server 140; is set to 172.16.0.5 for the IP telephone 100; and is set to 172.16.0.10 for the PDA 100.

The VoIP server registers and manages a combination of an IP address and a terminal ID. For example, this server registers and manages a combination of an ID: 1000 (of the PDA 100) and an IP address: 172.16.0.10.

FIG. 2 is a diagram showing a sequence for registering the IP address and the ID. Specifically, the PDA 100 notifies the VoIP server 140 of one's own ID (1000) and an IP address (172.16.0.10) by means of a registration signal (S210). The VoIP server 140 stores this information, and returns a registration check signal (S220).

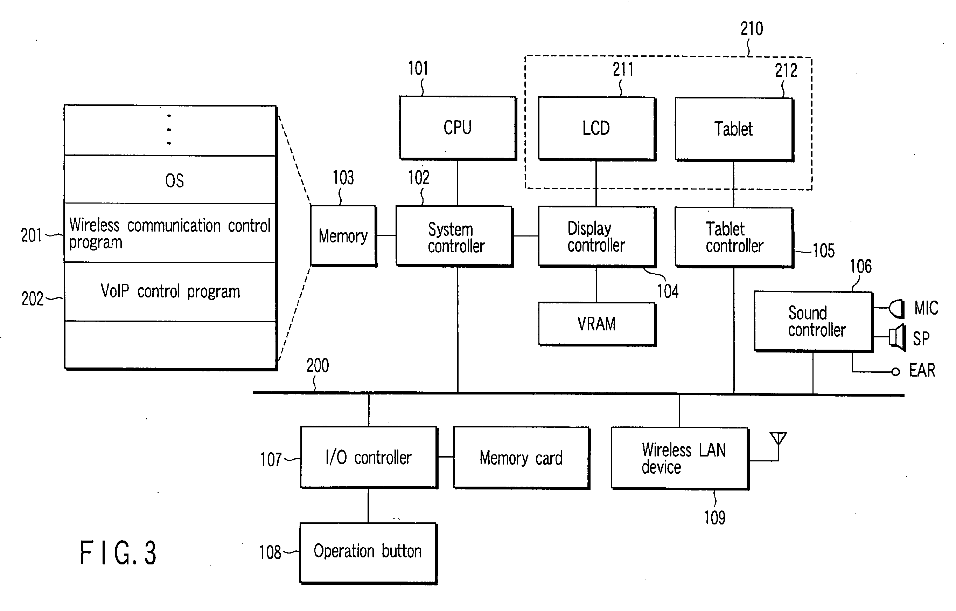

FIG. 3 shows a schematic configuration of the PDA according to the embodiment of the present invention. The PDA 100 has a CPU 101, a system controller 102, a memory 103, a display controller 104, a tablet controller 105, a sound controller 106, an I/O controller 107, a wireless LAN device 109, and a display device 210, etc.

The CPU 101 is a processor provided to control the operation of the PDA 100, and executes an operating system (OS), and various application programs and/or utility programs. The Operating system (OS) has a tablet control function to achieve a touch (tap) input operation. In addition, in the embodiment of the present invention, the CPU 101 executes a wireless communication control utility program 201 which performs a network connection by using the wireless LAN device 109, a VoIP control program 202 which achieves an IP telephone function, etc.

The system controller 102 is a bridge device which connects between the local bus of the CPU 101 and the system bus 200, and incorporates the memory controller which controls the memory 103. Moreover, the system controller 102 transmits and receives the image data and the display command to/from the display controller 104.

The memory 103 comprises a nonvolatile memory on which the operating system (OS), various application programs and/or utility programs are stored, a RAM used as a main memory, and a display memory area to which the VRAM is formed. The wireless communication control utility program 201 and the VoIP control program 202 are stored in the program storage area on the main memory in this embodiment. The wireless communication control utility program 201 provides the communication environment. The VoIP control program 202 provides the telephone environment of the IP telephone.

The display controller 104 controls a drawing of the screen image data onto the VRAM, and displays the screen image data drawn onto the VRAM on the LCD 211 used as a display device of the PDA 100. In the embodiment, the display controller 104 displays the operation screen of VoIP under the control of the GUI module (not shown) .

The tablet controller 105 controls the tablet 212 integrated with the LCD 211 to configure the display device 210. The tablet 212 has a transparent coordinates detection apparatus provided on the display screen of the LCD 211. A touch screen is configured of the LCD 211 and the tablet 212. In this embodiment, when the operation screen of the VoIP (not shown) is displayed on the LCD 211, the button operation position (tap operation position) provided to the operation screen of the VoIP is detected. Information of the button operation by the position detection is notified to the GUI module through the I/O controller 107.

The sound controller 106 performs the I/O control of the sound information including the voice under the control of various application programs. In this embodiment, the transmitting and receiving function of the IP telephone is achieved under the control of the voice control module included in the VoIP control program 202. The sound controller 106 inputs the telephone voice from the microphone (MIC), and outputs the receiving talk voice to the speaker (SP) and earphone (EAR), etc.

The controller I/O 107 performs the I/O controls of various I/O cards such as the operation button groups and the memory cards installed in the card slot.

The wireless LAN device 109 is a wireless communication device configured to execute the wireless communication, for instance, according to the IEEE 802.11a/IEEE 802. 11b standard, and, for instance, transmits and receives various packets of the voice and the message, etc. to the other party equipment connected to the network according to the VoIP application.

The display device 210 has the LCD 211 and the tablet 212, and has the coordinates input function to specify the display position on the screen displayed on the LCD 211.

### (First Embodiment)

In a first embodiment of the present invention, both a call control packet and a voice packet are transmitted and received via a VoIP server 140.

### (Talking method without movement)

A talk between a PDA (Personal Digital Assistant) 100 which is a VoIP terminal and an IP telephone 110 will be described here.

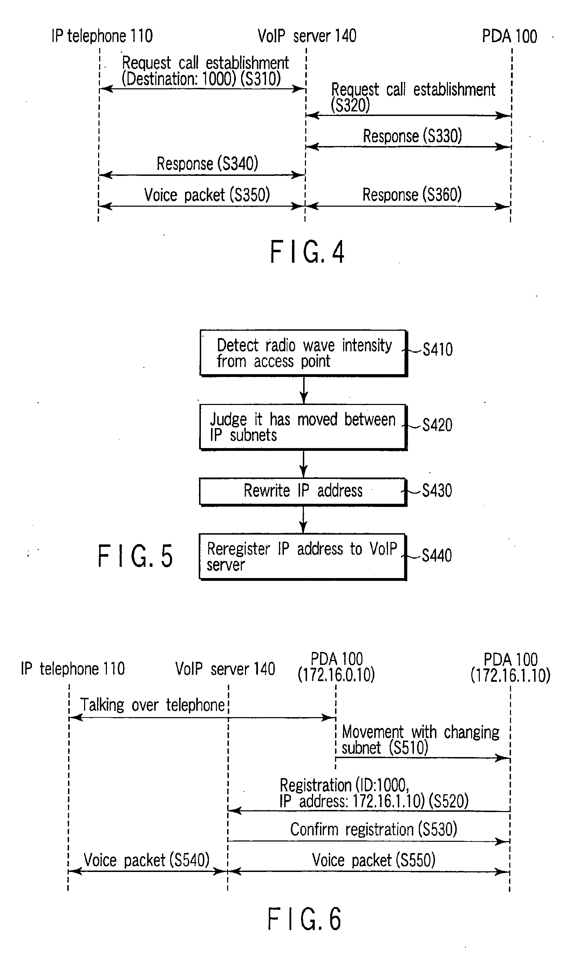

FIG. 4 is a diagram showing a sequence in the case where the IP telephone 110 makes a call to the PDA 100. The IP telephone 110 specifies the PDA's ID (1000) as a destination, and requests call establishment to the VoIP server 140 (S310). The VoIP server 140 relays the call establishment request to the PDA 1000 by referring to a correlation table of an ID and an IP address (S320). A response signal from the PDA 100 also relays the VoIP server 140, and is transmitted to the IP telephone 110 which is a call departure source (S330, S340). Here, H.323 is used as a series of call control protocols.

Then, voice talking is started between the IP telephone 110 and the PDA 100, and a voice packet is also transmitted and received via the VoIP server 140 (S350, S360). Here, an RTP is used as a voice talking transmission protocol.

### (Roaming; Starting talking after moving subnet)

Now, roaming, i.e., a case in which talking is started after moving another IP subnet will be described here. A description will be given by way of example in the case where talking is started between the PDA 100 and the IP telephone 110 after the PDA 100 has moved from an IP subnet to an IP subnet Y. It is presumed that the ID of the PDA 100 (1000) is not changed before and after movement of the IP subnet.

FIG. 5 is a flow chart of acquisition and registration of a new IP address in the case where the PDA 100 has moved from the IP subnet X to the IP subnet Y. When the PDA 100 is distant from an access point X130-1, and is close to an access point Y130-2, the PDA 100 driver (corresponding to a data link layer of an OSI reference model) detects that a radio wave from the access point X becomes weak, and a radio wave from the access point Y becomes strong (S410). Then, the PDA 100 telephone program determines that the IP subnet has moved from X to Y (S420). The PDA 100 telephone program acquires a new IP address by making inquiry to a DHCP (Dynamic Host Configuration Protocol) server 160, and rewrites an IP address of a network layer from 172.16.0.10 to 172.16.1.10 (S430). Then, the PDA 100 telephone program notifies the VoIP server 140 that an IP address having ID 1000 has been changed to a newly acquired IP address (172.16.1.10), and requests re-registration (S440). During this request, if a currently registered IP address (172.16.0.10) is transmitted together with the newly acquired IP address, the VoIP server 140 can identify whether re-registration due to movement of the PDA 100 has been made or another VoIP client has made registration by utilizing the same ID. Thus, a correlation between the ID of the PDA 100 and the newly acquired IP address can be reliably made. For example, in the case where another VoIP client has utilized the same ID, the PDA 100 already uses ID 1000, and thus, registration can be rejected. In addition, illegal use of the ID 1000 can be prevented.

In this manner, the VoIP server 140, having received a call establishment request from the IP telephone 110 to define a destination as the ID of the PDA 100 (1000), relays this signal to the re-registered IP address (172.16.1.10). Then, the PDA 100 can receive a call from the IP telephone 100 even from the IP subnet Y which is a move destination. During this roaming as well, call control for talking to be started is made in accordance with a flow chart described in FIG. 5.

### (Hand-over; Talking continuation in the case where subnet has been moved during talking)

Now, a hand-over, i.e., talking continuation in the case where a subnet has been moved during talking, will be described with reference to FIG. 6. When the PDA 100 has moved from the IP subnet X to the IP subnet Y (S510), the PDA 100 notifies the VoIP server 140 that the IP address of the ID 1000 has been changed to a newly acquired IP address (172.16.1.10), and requests re-registration (S520). These procedures are identical to those shown in FIG. 5. In FIG. 6, procedures after this re-registration has been primarily described. It may be notified that an IP address is changed, and at the same time, a port number specifying program in the PDA 100 is changed. For example, it may be notified that an IP address is changed and the port number 2500 is changed to 2501.

When it is found that the terminal of ID 1000 is busy, the VoIP server 140 having received this re-registration changes a destination of the voice packet to the newly acquired IP address (172.16.1.10) (5530) .

Further, according to the present embodiment, the VoIP server 140 relays talking. Thus, a terminal having moved to another subnet can continue talking such as voice conferences of three or more persons including another VoIP client merely by carrying out re-registration to the VoIP server (S540, S550). In addition, it may be notified in the call control packet that a voice compression system different from a voice compression system applied in the IP subnet X is applied in the IP subnet Y.

### (Second Embodiment)

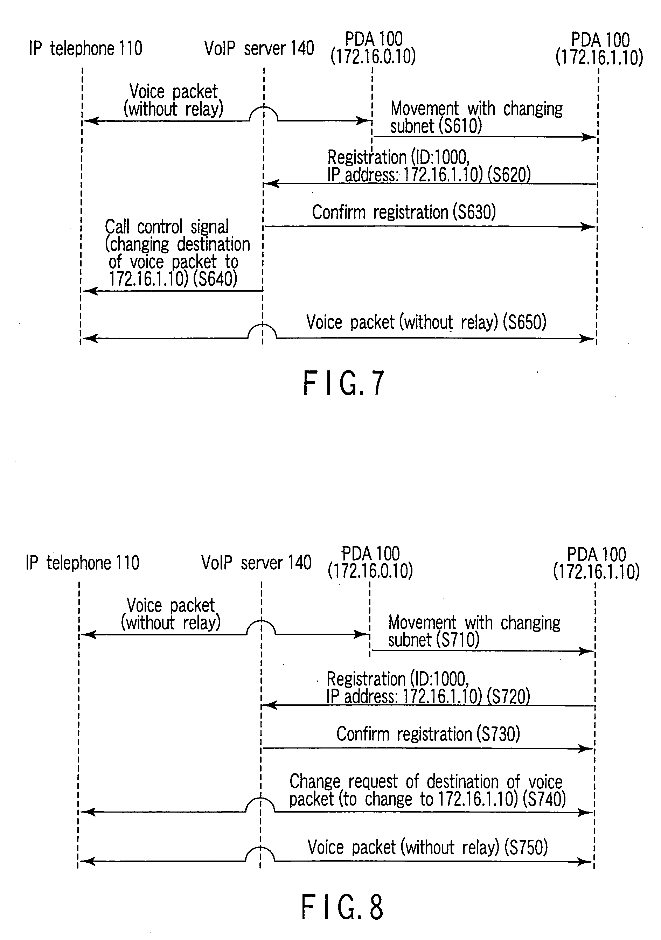

FIG. 7 shows a call control sequence according to a second embodiment of the present invention. In the present embodiment, a call control packet is exchanged via a VoIP server 140, and a voice packet is directly transmitted and received at an end to an end. The VoIP server 140 has means for transmitting a call control signal setting a required state to a terminal, thereby the terminal changing a called remote IP address or the like during talking at an end to an end. In this manner, even in the case where a talking terminal has changed a subnet (S610), the VoIP server can notify a talking party of the IP address change of the moved terminal, and thus, can achieve talking continuation (S620 to 5650) .

### (Third Embodiment)

FIG. 8 shows a call control sequence according to a third embodiment of the present invention. In the present embodiment as well, a call control packet is exchanged via a VoIP server 140, and a voice packet is transmitted and received at an end to an end. In the case where the VoIP server 140 is not provided with means according to the second embodiment, and a terminal whose subnet has been changed (S710) has a talk call, this terminal itself notifies a talking party of a request for changing a destination IP address of the voice packet (S720 to S750).

The above-described embodiments are provided as preferred specific examples of the present invention, and thus, a variety of technically preferable limitations are applied. However, of course, these limitations can be combined and changed properly within departing from the spirit of the invention.

For example, since the IP telephone 110 knows the ID of the PDA 100, but does not know an IP address, the IP telephone inquires the IP address of the PDA 100 to the VoIP server 140 (S310 of FIG. 4). However, in the case where the IP telephone 110 has a correlation table of the ID of the PDA 100 and the IP address in advance, the IP telephone may sent talking by directly sending a call control packet and a voice packet to the IP address of the PDA 100. Further, in the case where the PDA 100 has made a movement exceeding the IP subnet, the PDA 100 can continue talking by directly requesting re-registration of a newly acquired IP address (172.16.1.10) to the IP telephone 110.

Although another example of the VoIP terminal has been described by using a PDA which is a portable information terminal, a notebook type personal computer or the like may be used. Moreover, IPv6 (IP version 6) as well as IPv4 (IP version 4) may be used as an IP (Internet Protocol).

As has been described above, according to one aspect of the present invention, there can be provided a voice talking method reducing a load on a network associated with call control.

## Claims

1. A computer program, which is used to voice talking to cause an information terminal to execute voice talking, managing an ID of the information terminal and a first address over a first network, configured to store instructions for execution on a computer system enabling the computer system to perform:
determining that the information terminal moves over a second network which is different from the first network;
acquiring a second address over the second network; and
transmitting a request for re-registering a combination of the second address and the ID instead of the first address into another device having a combination of the first address and the ID registered therein.

2. The voice talking program according to claim 1, **characterized in that** the transmitting includes transmitting the first address in addition to the second address.

3. The voice talking program according to claim 1, **characterized in that**, in the case where the information terminal is in voice talk with the other information terminal and a request is made to said another device to relay a call control packet and a voice packet between the information terminal and said another information terminal, the transmitting includes requesting said another device to change an address of the voice packet to be transferred from said another information terminal to the information terminal, to the second address to be re-registered.

4. The voice talking program according to claim 1, **characterized in that**, in the case where the information terminal is in voice talk with said another information terminal, a request is made to said another device to relay a call control packet between the information terminal and said another information terminal, and a voice packet is directly transmitted to and received from the information terminal, the transmitting includes requesting the another device to notify said another information terminal of the second address to be re-registered by means of the call control packet.

5. The voice talking program according to claim 1, **characterized in that**, in the case where the information terminal is in voice talk with said another information terminal, a request is made to the another device to relay a call control packet between the information terminal and said another information terminal, and a voice packet is transmitted to and received from the information terminal, the transmitting includes transmitting the ID and the second address to said another information terminal.

6. The voice talking program according to claim 1, **characterized in that** said another device is another information terminal which is a prospect voice talking party, or which is to be a voice talking party.

7. The voice talking program according to claim 1, **characterized in that** the transmitting includes further transmitting the fact that a voice compression system which is different from a voice compression system applied to during utilization of the first address is applied during utilization of the second address.

8. The voice talking program according to claim 1, **characterized in that** the transmitting includes further transmitting the fact that a port number which is different from a port number applied during utilization of the first address is applied during utilization of the second address.

9. A voice talking method of causing an information terminal having an ID and a first address over a first network to carry out a voice talking, **characterized by** comprising:
determining that the information terminal moves onto a second network which is different from the first network;
acquiring a second address over the second network; and
transmitting a request for re-registering the second address instead of the first address into another device having the first address registered therein.

10. A voice talking apparatus having an ID and a first address over a first network, **characterized by** comprising:
means for determining movement onto a second network which is different from the first network;
means for acquiring a second address over the second network; and
means for transmitting a request for re-registering the second address instead of the first address into another device having the first address registered therein.
